# EUROPEAN PATENT SPECIFICATION

(11) **EP 0 727 344 B1**
(45) Date of publication and mention of the grant of the patent: **22.08.2001**
(21) Application number: 96301091.3
(22) Date of filing: 15.02.1996
(51) Int. Cl.: B62D 33/06, B65F 3/00, B60N 2/00

(54) **Cabin structure for a commercial vehicle**
Kabinenstruktur eines Nutzfahrzeuges
Structure de cabine d'un véhicule utilitaire

(30) Priority: 15.02.1995 GB 9502935
(43) Date of publication of application: 21.08.1996
(73) Proprietor: ERF LIMITED, Middlewich, Cheshire, CW10 0TN (GB)
(72) Inventor: Grindrod, Alan, Alderley Edge Cheshire SK9 7QG (GB); Allen, John, Aberdovey Gwynedd LL35 0RD (GB)
(74) Representative: Campbell, Iain Angus

(56) References cited:
- WO-A-91/08939
- BE-A- 559 593
- BE-A- 667 273
- DE-A- 2 656 667
- FR-A- 2 328 601
- FR-A- 2 450 733
- GB-A- 233 545
- GB-A- 472 433
- GB-A- 733 107
- GB-A- 1 170 994
- GB-A- 1 333 348
- US-A- 1 378 726
- US-A- 1 439 621
- US-A- 3 391 811
- US-A- 4 436 177
- AUTOMOTIVE ENGINEERING, vol. 83, no. 1, pages 22-23, XP002002877 "LOW-SLUNG CAB HAS CENTRAL DRIVING POSITION"
- AUTOMOTIVE ENGINEERING, vol. 88, no. 12, pages 100-101, XP002002878 YAMAGUCHI: "GOVERNMENT ADVOCATES TRUCK SAFETY PROJECT"

## Description

### Description of Invention

This invention relates to a cabin structure for a commercial vehicle.

The invention particularly, but not exclusively, relates to a cabin structure for a commercial vehicle which is a refuse collection vehicle or a street delivery vehicle. A refuse collection vehicle comprises a body which defines a load space for containing refuse and may also have a compacting means for receiving and compacting refuse and may have, alternatively, or addition, a hoist means to lift refuse containers or bins and tip their contents into the vehicle. Usually such vehicles collect refuse from street side premises. A street delivery vehicle comprises a body which defines a load space for containing articles to be delivered to street side premises such as crates of beverage bottles or beer barrels to public house premises or packages to private or business premises.

Such commercial vehicles, whether of the waste collection type or street delivery type, require at least a driver of the vehicle frequently to exit and enter the cabin structure of the vehicle as the vehicle is required to be continually advanced along the road and stopped to enable refuse to be collected or a delivery to be made.

Where the vehicle is a refuse collection vehicle it may have a crew of, for example, up to four crew members in addition to the driver and the crew members also require frequently to exit and enter the cabin structure.

Hitherto exit from or entry to the cabin structure has been restricted.

A vehicle similar to this type is disclosed in DE 2656667 A1.

According to the invention we provide a cabin structure for a commercial vehicle comprising, a floor, a front wall, a rear wall, two side walls, a roof, a driver's seat and driver operable control means wherein the cabin includes at least two crew seats and at least one side wall has an access opening closeable by at least one door, the floor has a portion or portions which extend horizontally or substantially horizontally from the base of the or each access opening to or adjacent to the driver's seat, at least the, or a, rearward portion of the floor is disposed in front of the, or an, engine compartment and/or the, or an, housing for the front wheels of the vehicle, and the base of the or each doro is substantially level with the floor at the door base, said horizontal portion or portions of the floor and the base of the door at said portion or portions are disposed at a level whereby, in use, they are not disposed above the axis of rotation of front wheels of the vehicle with which the cabin is to be used.

Each side wall may have an access opening and the floor may have a portion which extends horizontally or substantially horizontally transversely across the cabin structure from one access opening to the other.

Preferably the driver's seat is disposed centrally of the cabin structure.

Preferably, the or each of said doors when opened, does not project laterally substantially beyond the overall width of the cabin stucture.

A horizontal line, at or adjacent the mid-height of the or each access opening, and joining front and rear edges of the access opening may be inclined to the longitudinal axis of the cabin structure at an acute angle.

The acute angle may lie in the range 5° to 45° but preferably in the range 5° to 30° and more preferably in the range 10° to 25° and still more preferably in the range 15° to 20°

Each access opening may have a height of at least 1.6 metres and preferably above 1.8 metres and more preferably above 1.9 metres.

The or each access opening may be bounded by front and rear edges which lie in a plane.

The or each access opening may be closable by a door pivotable about an axis at the front of the access opening.

The forward portion of the floor may be inclined to the horizontal at an angle lying in the region 10° to 25°, preferably in the region 15° to 20°.

The horizontal portion of the floor, or the whole floor when the whole floor is horizontal, may be at a height above the ground when the vehicle is laden, lying in a range 410mm plus 300mm or -150mm.

The axis of pivot of the door may be perpendicular or substantially perpendicular to the forward portion, of the floor that is, the axis of pivot but may be inclined to a perpendicular to at least a forward portion of the floor at least in the fore and aft direction of the cabin at an angle lying in the range 0° to 10° and preferably 0° to 5°.

The or each door may be a folding door foldable about an intermediate axis which may be parallel or substantially parallel to the axis of pivot of the door relative to the cabin structure.

The door preferably folds inwardly of the cabin structure.

Rearwardly of the rearward portion of the floor the cabin structure may have at least two steps, each step comprising a riser part and a tread part.

The first tread part may be at a height so as to support a seat part of the driver's seat.

The first tread part may be at a height above the horizontal floor of the cabin structure, or horizontal portion of the floor of the cabin structure, which lies in the range 420mm ± 60mm, more preferably ± 20mm, still more preferably ± 10mm.

The driver's seat may be provided with a top surface which, in an unloaded position, is approximately 80mm above the level of the remainder of the tread part of the first step.

The driver's seat may be disposed centrally of the first step.

The first tread part may provide tread parts for crew member access to crew seats disposed generally rearwardly of the driver's seat.

In one embodiment the second step may have a tread part to provide an access step to crew seats provided on a tread part of a third step. The crew member seats in this embodiment may be arranged substantially transversely of the cabin structure behind the driver's seat, with the tread part of the second step providing foot support for the crew members. In this embodiment four crew member seats may be provided at the level of the said third step.

The second step may have a tread part at a height above the horizontal part of the floor lying in the range 810mm ± 60mm, and preferably ± 20mm, and still more preferably ± 10mm.

The second step may have a locally raised portion which may be up to 100mm higher than the remainder of the step, preferably about 50mm higher, to accommodate a part of the engine, said localised region being disposed in a generally central region of the cabin structure.

The third step may have a tread part at a height above said horizontal part of the floor lying in the range 1150mm ± 60mm, preferably ± 20mm, and still more preferably ± 10mm.

The crew seats provided on the third step may have a top surface, in an unloaded condition which is approximately 80mm above the level of the remainder of the tread part of the third step.

In another embodiment the second step may have a tread part at a height to support a seat part of crew seats which are aligned or substantially aligned transversely of the cabin structure and the driver's seat is arranged substantially in front of the crew member seats, with the tread part of the first step providing foot support for the crew members. In this embodiment two crew member seats may be provided at the level of the second step disposed generally behind and on opposite lateral sides of the driver's seat.

The second step in this embodiment may have a tread part at a height above the horizontal part of the floor lying in the range 810mm - 870mm ± 60mm and preferably ± 20mm, and still more preferably ± 10mm. The crew member seats provided on the second step may have a top surface which, in an unloaded condition is approximately 80mm above the level of the remainder of the tread part of the second step.

The cabin structure may include a steering wheel which is movable away from the driver's seat to facilitate access to the seat for the driver.

The steering wheel may be mounted on a column which is pivoted to the cabin structure at or adjacent the floor adjacent the front of the cabin structure about a generally horizontal transversely extending axis.

Lock means may be provided to lock the steering column at a desired angle of inclination.

A cabin structure embodying either aspect of the invention enables the driver or crew member to have easy access to and exit from the cabin structure from the near side of the vehicle as well as from the offside, thus the driver or crew member may enter or leave the cabin structure from the nearside of the vehicle with consequent increase in safety as well as speed and convenience of access to streetside waste or premises.

According to a second aspect of the invention we provide a commercial vehicle chassis having a cabin structure according to the first or second aspect of the invention mounted thereon.

Where the floor comprises at least one portion which is horizontal or substantially horizontal to the or each said portion, said rearward portion of the floor is not disposed above the axis of rotation of front wheels of the vehicle.

The or each horizontal or substantially horizontal portion of the floor, or the whole floor when the whole floor is horizontal, may be at a height above the ground, when the vehicle is laden, lying in the range 410mm + 300mm or - 150mm. More preferably, 410mm + 200mm or -75mm, still more preferably 410mm + 100mm or -50mm, and yet more preferably 410mm + 50mm or -25mm, and most preferably 410mm ± 10mm.

The cabin structure may be pivotally mounted on the chassis at or adjacent the front of the chassis for pivotal movement about an axis extending transversely of the chassis.

The chassis may comprise a main chassis part extending longitudinally of the vehicle and, at the front of said main part, a lower part disposed at a lower level and forwardly of the main part and connected thereto by generally downwardly extending parts. The lower part may be disposed below the floor of the cab when the cab is in an operative position.

The lower part may have a rearward part beneath the rearward portion of the floor of the cab and a forward part beneath the forward portion of the floor of the cab.

The forward part of the lower part of the chassis may be inclined to the rearward part.

The forward part may be disposed to the horizontal at a similar angle to the forward part of the floor.

The chassis may be provided with suspension means for a pair of front steerable wheels of the vehicle.

The chassis may comprise two spaced parallel longitudinally extending members, each member carrying suspension means for one of the wheels of said pair.

The suspension means may comprise a leaf spring suspension having a front beam axle extending transversely of the vehicle and supported by said leaf springs, preferably intermediate the ends of the springs, and the ends of the springs being mounted on the chassis.

The axle may be provided with steerable hubs mounted on the beam axle for steering movement about a steering axis under the control of a steering lever, the steering lever being connected by a drag link to an upper end of a drop arm, the drop arm being pivotally mounted for rotation about a generally horizontal transversely extending axis of a steering box and extending generally upwardly from said axis to the position of pivotal connection to the drag link which may be disposed at or adjacent the stationary geometry point of the suspension.

The steering box may be carried by one of the chassis members.

Preferably the steering box is disposed at or adjacent the underside of the chassis.

The steering box may be housed in a hollow part of the chassis.

The hollow part may comprise two transversely spaced members of the chassis which extend generally downwardly between one of the main chassis parts and one of said lower chassis parts.

By positioning the steering box below the leaf spring or other suspension means with the drop arm extending upwardly to the level of the drag link, the interior of the cab may be relatively low.

A steering linkage may extend from an input of the steering box to the lower end of the steering column beneath the floor of the cabin structure.

If desired, the chassis may be provided with two pairs of steerable wheels, one pair being disposed rearwardly of the other pair, the one wheel of the front pair being steered by said drag link and the other wheel of said pair being steered by a track rod in conventional manner and one wheel of the rearward pair being steered by an extension drag link and the other wheel by a second track rod.

According to a third aspect of the invention we provide a commercial vehicle comprising a cabin structure according to the first aspect of the invention or a chassis according to the second aspect of the invention.

The doors when opened may not project laterally substantially beyond the overall width of a body of the vehicle.

The commercial vehicle may be a waste collection vehicle or a street delivery vehicle.

Embodiments of the invention will now be described by way of example with reference to the accompanying drawings, wherein:
FIGURE 1 is a side view of a waste collection vehicle embodying the invention;
FIGURE 2 is a fragmentary side elevation, to an enlarged scale, of the vehicle of Figure 2 with part of the cabin structure broken away;
FIGURE 2a is a fragmentary side elevation showing the chassis of the vehicle of Figure 2 but with the cabin structure omitted;
FIGURE 3 is a section on the line 3-3 of Figure 2;
FIGURE 3a is a plan view of the part of the chassis shown in Figure 2a;
FIGURE 4 is a front view of the vehicle of Figure 1;
FIGURE 5 is a view similar to that of Figure 2 but showing an alternative cabin configuration;
FIGURE 6 is a section on the line 6-6 of Figure 5; and
FIGURE 7 is a front view of the vehicle of Figure 5.

Referring now to the drawings, there is shown a commercial vehicle 10 which, in the present example, comprises a refuse collection vehicle 11 of conventional kind comprising a chassis 12 on which a cabin structure 14 is pivotally mounted and a body 15 is carried.

The body 15 defines a load space 16 for containing refuse and has a compacting means 17 mounted at the rear of the body for receiving and compacting refuse. If desired, alternatively or in addition, the body may be provided with a hoist means to lift refuse containers or bins and to tip their contents into the vehicle. If desired, such hoists may be provided at the side of the body, or at the front of the body to lift the container or bins over the cabin structure, instead of at the rear.

The chassis 12 has first and second driven axles 18 driven via a propeller shaft from an engine 20 in conventional manner. The chassis 12 also has a pair of front, steerable, wheels 21.

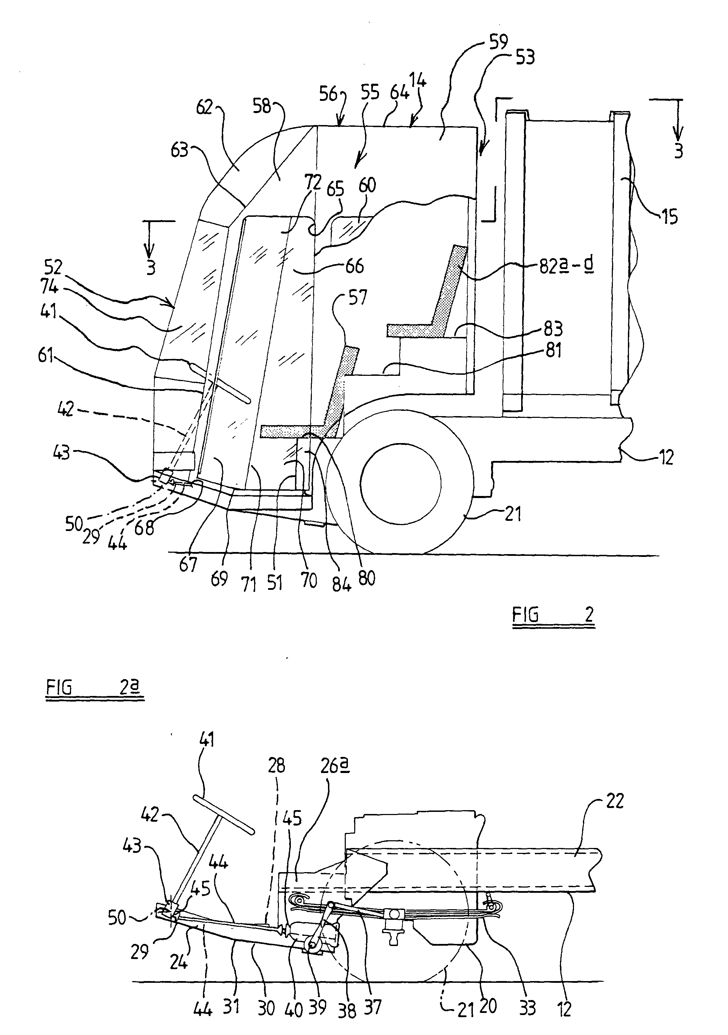

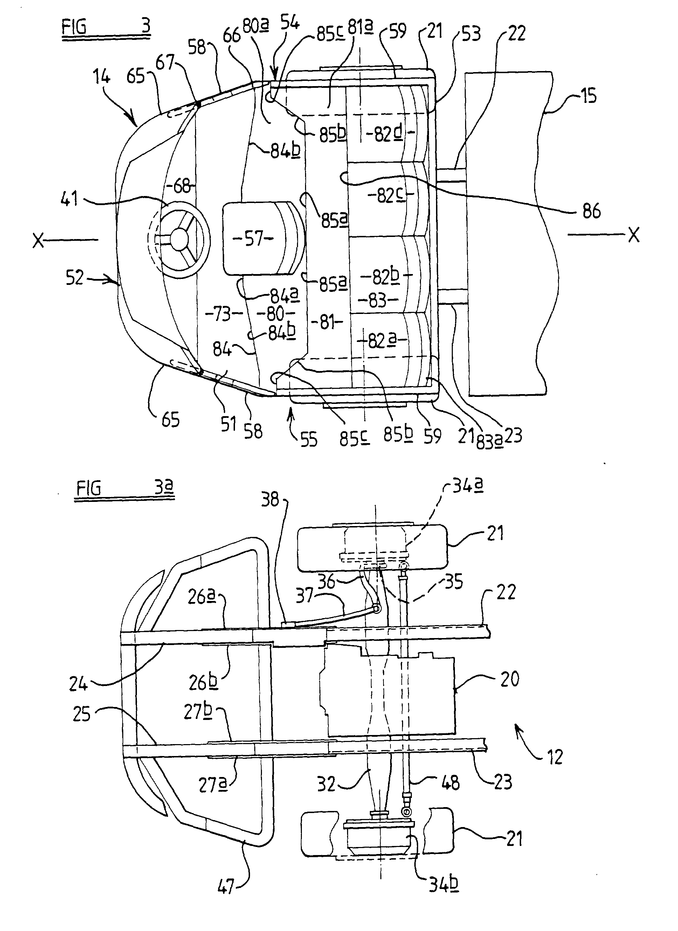

As best shown in figures 2a and 3a the chassis 12 comprises a pair of transversely spaced longitudinally extending main chassis members 22, 23 of channel section disposed with the mouths of the channels opposed to each other. At their forward ends, lower chassis members 24, 25 are connected to the main chassis members by generally downwardly extending pairs of plates 26a, b; 27a, b. The lower chassis members 24, 25 have a rearward part 28 and a forward part 29. The forward parts 29 extend upwardly and forwardly at an acute angle of 17° to the horizontal whilst the rearward parts are horizontal. The downwardly extending chassis members 26a, 26b; 27a, 27b have a rearward bottom surface portion 30 which is inclined upwardly and forwardly at an acute angle of 7° to the horizontal and a forward bottom surface portion 31 which lies in horizontal plane. A protection plate 30a is provided to extend below the chassis members 28, 29.

A conventional beam axle 32 is suspended from the chassis 24 by a pair of conventional leaf springs 33 in conventional manner. The wheels 21 are carried on steerable hubs 34a, b of the axle 32. One of the hubs 34a, is pivoted about a steering axis 35 by a steering lever 36 connected by a drag link 37 to an upper end of a drop arm 38 at or adjacent the neutral geometric part of the suspension. The drop arm 38 is fixed to, and extends upwardly from, an axle 39 which projects from a steering box transversely of the cabin structure. The steering box 40 is positioned below the level of the leaf spring 33 and is housed in a recess provided between the generally vertically downwardly extending chassis members 26a, 26b so that the steering box 40 is protected thereby. By providing the steering box below the level of the leaf spring 33 and by arranging that the drop arm 38 extends upwardly the level of the interior of the cabin structure is minimised. The steerable hub 34a is connected to the steerable hub 34b by a track rod 48 in conventional manner.

A steering wheel 41 is carried on a steering column 42 which at its lower end is provided with a gearbox 43 by which a first shaft 44 is rotated through a universal joint 45. The shaft 44 is connected by a further universal joint 45 to an input to the steering box 40.

The engine 20 is supported, on suitable mountings, between the main chassis members 22, 23 above the beam axle 32.

An outrigger structure 47 is supported on the lower chassis members 24, 25.

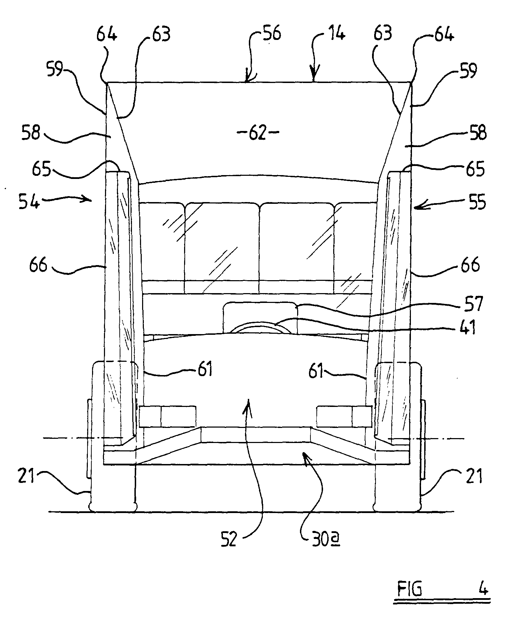

Referring now particularly to Figures 2, 3 and 4, the cabin structure 14 is pivotally mounted on the lower chassis members 24, 25 for pivotable movement about axis 50 which extends transversely of the vehicle perpendicular to a longitudinal axis thereof.

When the cabin structure is in its operative position it is in the position shown in Figures 2, 3 and 4 of the drawings but the cabin structure may be pivoted about the axis 50 in an anticlockwise direction in Figure 2 so as to provide access to the chassis, suspension and engine. Suitable locating and locking means are provided to lock the cabin structure in its operative position and to maintain it in its open position in conventional manner.

The cabin structure 14 comprises a floor 51, a front wall 52, a rear wall 53, two side walls 54, 55, a roof 56, a driver's seat 57, and the normal driver operable controls including the steering wheel 41 described hereinbefore and conventional accelerator, brake pedals and gear change controls and hand brake (not shown) but all operable by a driver sitting in the driver's seat 57. The cabin structure is also provided with ancillary controls as required for the vehicle in conventional manner.

The drivers seat 57 is disposed laterally centrally of the cab and so has good vision to the front corners of the vehicle as well as providing on obstructed access to the interior of the cab via access openings 65 described below. If desired the drivers seat may be displaced from the central position described above by up to 300 mm either side of the central position and such a range of positions as referred to herein as being laterally centrally or substantially laterally centrally.

Each side wall 54, 55 comprises a forward part 58 and a rearward part 59. The rearward part 59 is substantially planar over the majority of its extent lying in a vertical plane which is parallel to a fore and aft axis X-X of the cabin structure and hence of the vehicle. The rearward parts 59 are provided with windows 60.

The forward part of each side wall 58 is also generally planar lying in a generally vertical plane but which is inclined to the fore and aft axis X-X at an angle of 18°.

The forward side wall parts 58 join with the front wall 52 along a junction line 61 and with a front part 62 of the roof along a junction line 63 and with the remainder of the roof along a junction line 64. In the present example the side walls, front wall and roof mutually join in a region centred on the respective junction lines which is of relatively small radius, although it will be appreciated that, if desired, the region of join between the walls and roof may be relatively gradual and comprise regions of relatively smaller curvature than in the present example.

Because the forward parts 58 of the side walls are inclined forwardly and inwardly at the above described acute angle to the rearward parts of the side walls and to the fore and aft axis X-X of the vehicle, the forward parts 58 are disposed laterally inwardly of the rearward part.

The forward parts 58 are each provided with an access opening 65 which is closable by a door 66. Each door 66 is connected to a respective forward part 58 for rotation about a pivot axis 67 which is at the front of the access opening and is inclined to a vertical line so as to be closer to a perpendicular to a forward portion 68 of the floor 51 of the cabin structure. The forward portion 68 is parallel to the forward part of the lower chassis members 29. In the present example the pivot axis 67 is not precisely perpendicular to the forward portion 68 but is inclined thereto at an angle of about 8°.

By inclining the axis 67 so as to be, as close as practicable, perpendicular to the forward portion 68 of the floor, change in spacing between the underside 69 of the door and the forward portion 68 of the floor is minimised as the door is pivoted from a closed position, in which it lies in the plane of the access opening 65 to an open position, in which it lies substantially at 90° to its closed position and extends transversely inwardly of the cabin structure. Suitable clearance and flexible sealing means such as bristles is provided between the under surface 69 and the floor to accommodate the deviance from perpendicularity. The door 66 is a folding door with a rearward leaf 70 being vertically connected to a forward leaf 71 along an intermediate pivot axis 72 which is parallel to the axis 67. The access openings each have a height of 2 metres and preferably have a height of at least 1.6 metres to provide easy access to interior of a cabin. Preferably, the access openings each have a height above 1.8 metres and, more preferably, above 1.9 metres.

The leaves 70, 71 of the door are glazed to give the driver good lateral vision and the front wall 52 is provided with a wrap-round windscreen 74.

Rearwardly of the forward portion 68, the floor has a horizontal rearward portion 73 which extends at its outer edges over the whole fore and aft extent of the access openings 65 and is level across the whole lateral extent of the cabin structure. The horizontal portion of the floor i.e. the operative upper surface disposed below the axis of rotation of the front wheels 21 so as to be 410mm above the ground when the vehicle is laden, but may be at a height lying in the range 410mm + 300mm or -150mm. More preferably, 410mm + 200mm or -75mm, still more preferably 410mm + 100mm or -50mm, and yet more preferably 410mm + 50mm or -25mm, and most preferably 410mm ± 10mm. Depending upon the diameter of the front wheels the horizontal portion the floor will generally not be above the level of said axis of rotation of the front wheels.

Within the cabin structure is provided a first step 80 having a tread part 80a which, in a central region, supports the seat 57 and which in lateral regions on opposite sides of the seat 57 provide an access step for crew members to pass from the rearward floor portion 73 to a tread part 81a of a second step 81 upon which they can stand prior to sitting on one of four seats 82a-d and on which, of course, they can rest their feet whilst thus seated. The seats 82a-d are carried on a tread part 83a of a third step 83.

The seats 82a-d are aligned transversely across the cabin structure and are disposed sufficiently rearwardly of the driver's seat 57 to provide adequate room for crew members sitting on any one of the seats and in particular the seats 82b or 82c which are disposed partially laterally behind the driver's seat 57.

A first riser 84 between the rearward floor portion 73 and the tread part 80a of the first step 80 has laterally inner parts 84a which extend transversely of the cabin structure perpendicular to the fore and aft axis X-X and two laterally intermediate parts 84b which are inclined to the fore and aft axis at an acute angle of so as to maximise space for entry or exit through the access opening 65 and two laterally outer parts 84c which are perpendicular to the axis X-X. A second riser 85 between the tread 80a of the first step 80 and the tread 81a of the second step 81 has an inner part 85a which extends transversely across the majority of the width of the riser perpendicular to the axis X-X and has intermediate parts 85b which are inclined forwardly and outwardly and outermost parts 85c which are perpendicular to the axis X-X to provide, with the remainder of the second and third steps, a "wheel arch" or housing for the front wheels 59. A third riser 86 extends between the second tread level of the third tread level and extends rectilinearly across the width of the cabin structure perpendicular to the axis X-X. The above described configuration provides good access steps, particularly at the level of the tread 81a of the second step 81.

The first tread part is at a height of 420mm above the horizontal floor of the cabin structure but may be at a height which lies in the range 420mm ± 60mm, more preferably ± 20mm, still more preferably ± 10mm. The driver's seat may be provided with a top surface which, in an unloaded position, is approximately 80mm above the level of the remainder of the tread part of the first step.

The second tread part is at a height of 810mm above the horizontal floor of the cabin structure but may be at a height which lies in the range 810mm ± 60mm, and preferably ± 20mm, and still more preferably ± 10mm. The second step provides an engine compartment which accommodates a part of the engine 20 therebeneath and may have a locally raised portion which may be up to 100mm higher than the remainder of the step, preferably about 50mm higher, to accommodate a part of the engine, said locally raised portion being disposed in a generally central region of the cabin structure.

The third tread part is at a height of 1150mm above the horizontal floor of the cabin structure but may be at a height which lies in the range 1150mm ± 60mm, preferably ± 20mm, and still more preferably ± 10mm.

The crew seats provided on the third step may have a top surface, in an unloaded condition which is approximately 80mm above the level of the remainder of the tread part of the third step. The third step accommodates at least part of the engine there beneath.

The above described cabin structure provides the driver occupying the driver's seat 57 with good access so that the driver can enter into and exit from the cabin structure easily at either side of the vehicle. In addition, the driver has good visibility of either corner of the vehicle as he is positioned relatively close to either the front nearside or the front offside corner and so can judge his position relatively easily. In addition the relatively large amount of window provided in the side walls 54, 55 give the driver good vision to either side of the vehicle as well as adequately good vision down into the rear. The central disposition of the driver permits crew members easy and rapid access to and exit from the cabin structure and to the seats 82a-d from either side or both sides of the vehicle simultaneously without being obstructed by the driver.

The forward hinging of the doors 58 ensures that passage of driver and crew members through the access opening is not hindered.

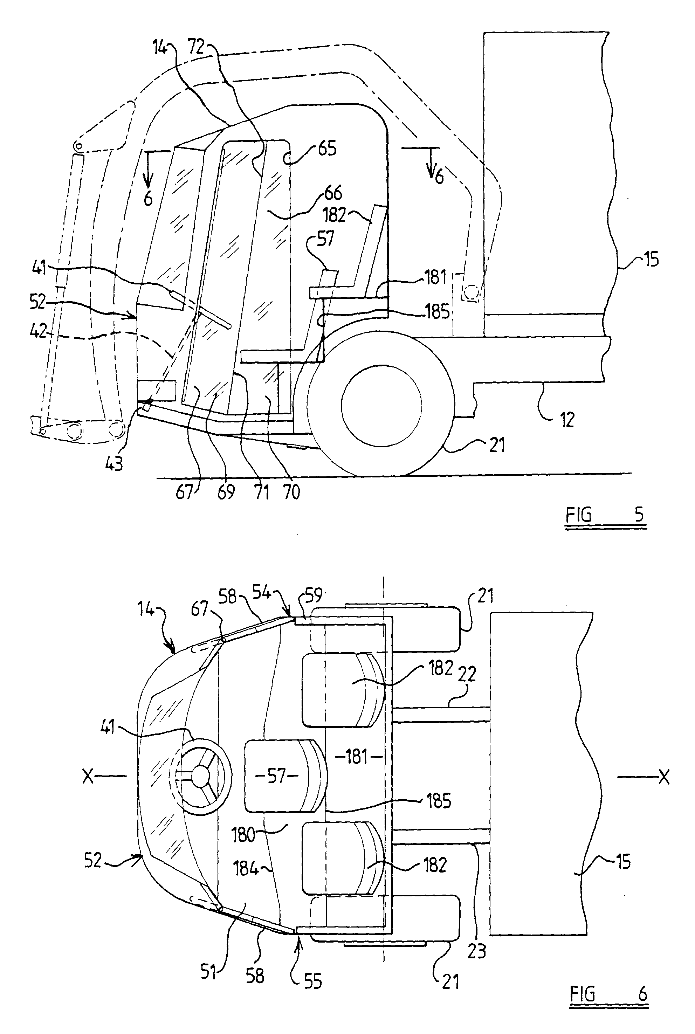

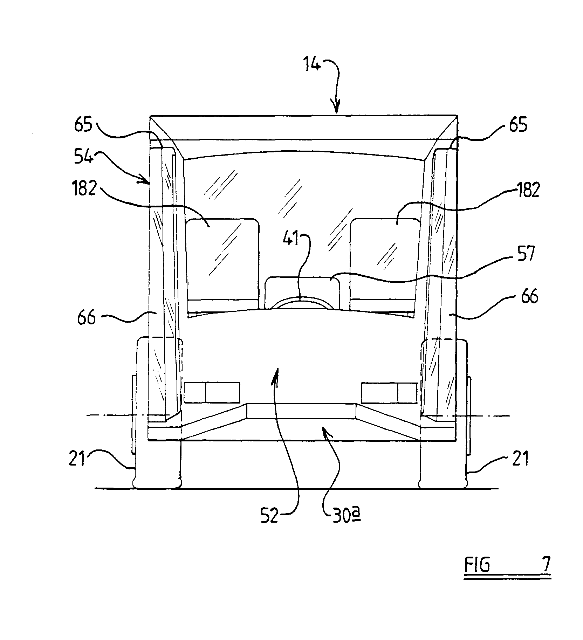

Referring now to Figures 5 to 7, an alternative embodiment is illustrated, in which seats are provided for only two crew members. This embodiment is more suitable for a waste collection vehicle having a front end loader, such as illustrated diagrammatically at L in Figure 5, since fewer crew members are generally required when a front end loader is provided. In this embodiment the chassis is as described hereinbefore with reference to Figures 2a and 3a and thus does not require further discussion. The body 15 differs in that it is provided with the front end loader L. The cabin structure 14 is lower than the cabin structure 14 of the previously described example. In addition, the cabin structure is of smaller longitudinal extent.

Except for the longitudinal extent of the rear part of the side walls, the external structure of the cabin structure 14 is the same as the cabin structure 14 as described hereinbefore and hence corresponding parts have been referred to by the same reference numerals and further discussion of these parts is not required.

The interior of the cabin structure of the present example is similar to the interior of the cabin structure described hereinbefore except that provision is made for carrying only two crew members. In this embodiment the configuration of the cabin floor and of the first step 80 and its riser 84 is as described in connection with the first embodiment. The second step is, however, different and is indicated in Figures 5 to 7 by reference numeral 181. The second step 181 carries two crew member seats 180 which are aligned laterally of the vehicle and are disposed substantially wholly to the rear of the driver's seat 57 but with a small extent of overlap where the rear of the driver's seat 57 extends rearwardly beyond the front of each crew member seat. Accordingly, in this specification the term "generally rearwardly" is to be construed to encompass a case where the crew seats are wholly to the rear of the driver's seat as well as a case where the seats overlap in the fore and aft direction. Analogously, the term "at a generally higher level" is to be construed to cover a case where the crew seats are wholly at a higher level than the driver's seat as well as a case where the seats overlap in level. In each case it is preferred that at least the majority of the fore and aft, or vertical, extend respectively of each crew seat is to the rear or at a higher level respectively than the driver's seat.

The riser 185 of the second step 181 in this example extend rectilinearly across the lateral extent of the cabin structure and is perpendicular to the longitudinal axis X-X thereof. Access to the crew member seats 182 is, of course, similarly convenient as is access to the seats 81a-d of the first embodiment and, indeed, in so far as only one step needs to be climbed access is even easier in this embodiment. The second step provides an engine compartment which accommodates part of the engine there beneath and may be provided with a locally raised portion disposed in a generally central region of the cabin structure to accommodate a part of the engine. This locally raised portion may be similarly dimensioned to that of the first embodiment or may be higher because it can be disposed between the crew seats.

The second step also provides a "wheel arch" or housing for the front wheels of the vehicle.

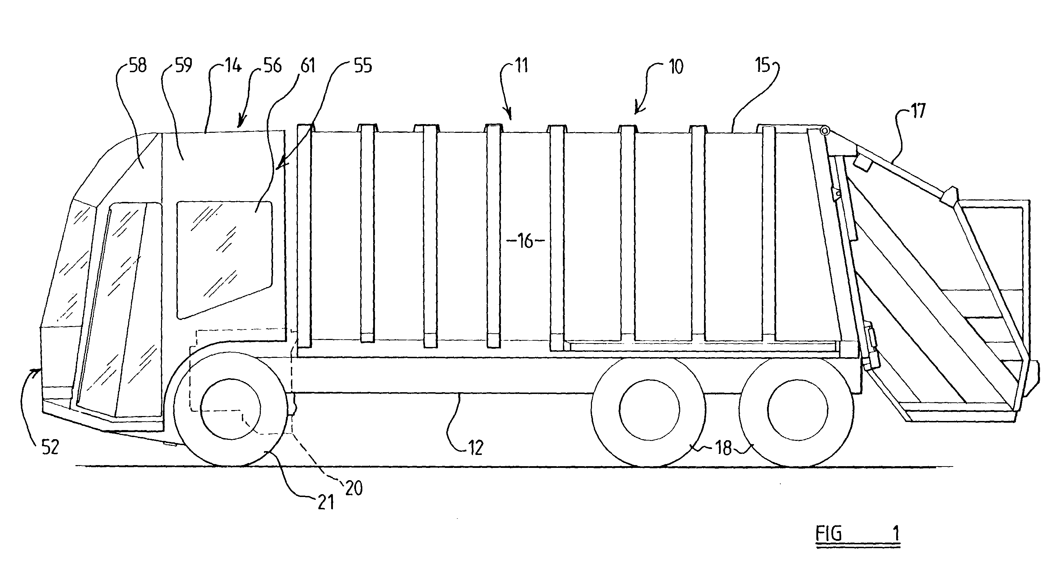

Although the above described embodiments of the vehicle are waste collection vehicles, the invention may be applied to any other suitable design of commercial vehicle such as, for example, a street delivery vehicle. In this case the cabin may be of either the configuration of Figures 1 to 4, or that of Figures 5 to 7, although generally a street delivery vehicle cabin will be of the configuration of Figures 5 to 7 or indeed may be provided with only a centrally disposed driver's seat. Such a cabin configuration provides the driver with convenient and rapid passage into and out of the cabin structure from either side of the vehicle as well as providing the driver with good visibility to the forward corners of the vehicle with consequent ease for him to position the vehicle accurately when moving in confined spaces typically encountered with street delivery vehicles.

If desired, the cabin structure according to the present invention may be applied to any other vehicle including, for example, a passenger transport vehicle such as a coach.

The inclined forward side wall parts ensure that a driver or crew member emerges from the vehicle within the overall width of the vehicle with consequent safety.

The upwardly inclined undersurface of the chassis provides a good approach angle so that grounding of the chassis when the vehicle is descending a relatively steep slope onto a less inclined slope or is approaching a more inclined slope, is avoided.

Although in all the embodiments previously described the driver's seat has been disposed centrally of the cabin structure, if desired the driver's seat may be disposed towards one side of the cabin structure. Depending upon the extent of offset access to crew member seats from the side of the vehicle towards which the driver's seat is offset may be restricted or impossible but access from the other side of the vehicle is correspondingly increased. If desired, the side walls of the vehicle may be correspondingly asymmetrical. That is to say, the more the driver's seat is offset to one side of the vehicle the greater may be the extent of lateral inward displacement of a forward part of the side wall cabin structure on the other side of the vehicle thereby increasing the size of the access opening and, increasing the size of the area within the overall width of the vehicle in which the driver or a crew member may enter into or exit from, the cabin structure. In an extreme case, if desired, the driver's seat may be displaced towards one side of the cabin structure to such an extent that the forward and rearward parts of the side wall on that side of the cabin structure are coplanar or substantially coplanar.

If desired the vehicle may be provided with only one access opening of the kind described hereinbefore and in this case a single horizontal or generally horizontal portion of the floor may extend from the access of opening to or substantially to the driver's seat.

Where the vehicle has two access openings and two horizontal or substantially horizontal floor portions although it is preferred that in this case the floor portions lie in the same plane so as to provide a single horizontal or substantially horizontal floor portion which extends transversely plus the cabin structure from one access opening to the other, if desired there may be a portion of the floor in the region of the driver's seat which is at a different level to the other portion and still provide ease of access for the driver and crew members since a localised region of the floor adjacent the driver's seat would not obstruct access.

If desired, the crew seats may be provided as separate seats or as "bench" type seats where at least one of a backrest part or a squab part of more than one seat are provided by a single element long enough to accommodate more than one crew member or by a combination of bench type seats or by a combination of bench type seats and separate seats. Accordingly, the term "crew seats" is to be construed herein to mean seats for a specified number of crew members however provided.

The forward part of at least one side of the wall may be inclined to the longitudinal axis X-X at any desired angle in the range 5° to 45°, but preferably in the range 5° to 30°, more preferably in the range 10° to 25° and still more preferably in the range 15° to 20°.

Although in the above described examples the floor of the cabin structure and the underlying part of the chassis has been described as having a rearward part which is horizontal and a forward part inclined upwardly at an angle of, in the illustrated example, 17°, if desired, the angle of inclination may be greater, for example up to 25° or, particularly where the vehicle is not required to be driven over relatively rough ground, for example at landfill sites for discharge of refuse, the floor of the whole of the cabin structure and the underlying chassis may be inclined to the horizontal at less than 17° or indeed may be horizontal.

If desired the access openings may be closed by a door or doors, other than by an inwardly foldable door as described hereinbefore, which when open does not project laterally beyond the overall width of the cabin structure. For example, a door which is mounted by a track and/or linkage to slide forwardly and inwardly to lie generally parallel to the windscreen when open or by a foldable door or doors which have leaves of sufficiently small width so that when pivoted outwardly they do not project laterally substantially beyond the overall width of the cabin structure. By the overall width of the cabin structure we mean the widest part of the cabin structure including any wing, mud guard or the like. When the cabin structure is mounted on a finished vehicle then the doors may project beyond the overall width of the cabin structure but not substantially beyond the overall width of the vehicle.

## Claims

1. A cabin structure for a commercial vehicle comprising a floor (51), a front wall (52), a rear wall (53), two side walls (54, 55), a roof, a driver's seat (57) and driver operable control means (41) wherein the cabin includes at least two crew seats (82) and at least one side wall has an access opening (65) closeable by at least one door (66), the floor (51) has a portion or portions (73) which extend horizontally or substantially horizontally from the base of the or each access opening (65) to or adjacent to the driver's seat (57), at least the, or a, rearward portion (73) of the floor is disposed in front of the, or an, engine compartment (20) and/or the, or an, housing for the front wheels (21) of the vehicle, and the base of the or each door is substantially level with the floor at the said base characterised in that said horizontal portion or portions (73) of the floor on the base of the door at said portion or portions are disposed at a level whereby, in use, they are not disposed above the axis of rotation of front wheels (21) of the vehicle with which the cabin (14) is to be used.

2. A cabin structure according to claim 1 characterised in that the driver's seat (57) is disposed centrally of the cabin structure (14).

3. A cabin structure according to claim 1 or claim 2, characterised in that the or each of said doors (66), when opened, does not project laterally substantially beyond the overall width of the cabin structure.

4. A cabin structure according to any one of the preceding claims, characterised in that each of said crew seats (82a - d) is disposed generally rearwardly of the driver's seat (57) and at a generally higher level than the driver's seat.

5. A cabin structure according to claim 4, characterised in that each of said crew seats (82a - d) is disposed at a level above a compartment for the engine (20).

6. A cabin structure according to any one of the preceding claims characterised in that each side wall (54,55) has an access opening (65) and the floor (73) has a portion which extends horizontally or substantially horizontally transversely across the cabin structure from one access opening (58) to the other (58).

7. A cabin structure according to any one of the preceding claims characterised in that a horizontal line, at or adjacent the mid-height of the or each access opening, and joining front and rear edges of the access opening is inclined to the longitudinal axis of the cabin structure at an acute angle which lies within the range 10° to 45°.

8. A cabin structure according to any one of the preceding claims characterised in that the horizontal portion (73) of the floor, or the whole floor when the whole floor is horizontal, is at a height above the ground, when, in use, the vehicle is laden, lying in the range 410mm + 300mm or -150mm.

9. A cabin structure according to claim 8, characterised in that the axis of pivot (67) of the door (66) is oriented relative to a perpendicular to at least a forward portion (68) of the floor at least in the fore and aft direction of the cabin at an angle lying the rage 0° to 10°.

10. A cabin structure according to claim 3 characterised in that the door (66) folds inwardly of the cabin structure.

11. A cabin structure according to any one of claims 6 to 10 characterised in that rearwardly of the rearward portion (73) of the floor, the cabin structure has at least two steps (80, 81) each step comprising a riser part (84,85) and a tread part (80a, 81a) and the first tread part (80a) is at a height so as to support a seat part of the driver's seat (57).

12. A cabin structure according to claim 11 characterised in that the second step (81) has a tread part (81a) to provide an access step to crew seats (82a - d) provided on a tread part on a third step (83), the crew seats being arranged substantially transversely of the cabin structure behind the driver's seat (57), with the tread part (81a), of the second of the second step (81) being adapted to provide foot support for the crew members when seated in said crew seats.

13. A cabin structure according to claim 11 characterised in that the second step (181) has a tread part at a height to support a seat part of crew seats (182) which are aligned or substantially aligned transversely of the cabin structure and the crew seats are arranged generally behind the drivers seat (57) with the tread part of the first step 180 being adapted to provide foot support for the crew members.

## Patentansprüche

1. Kabinenkonstruktion eines Nutzfahrzeugs mit einem Boden (51), einer Vorderwand (52), einer Rückwand (53), zwei Seitenwänden (54, 55), einem Dach, einem Fahrersitz (57) und einer durch den Fahrer betätigbaren Steuerungseinrichtung (41), wobei die Kabine mindestens zwei Besatzungssitze (82) enthält und mindestens eine Seitenwand eine durch mindestens eine Tür (66) schließbare Zugangsöffnung (65) hat, wobei der Boden (51) einen Abschnitt oder Abschnitte (73) hat, die sich horizontal oder im wesentlichen horizontal von der Basis der oder jeder Zugangsöffnung (65) zu dem Fahrersitz (57) oder einem Ort neben ihm hin erstrecken, wobei zumindest der oder ein hinterer Abschnitt (73) des Bodens vor dem oder einem Motorabteil (20) und/oder dem oder einem Gehäuse der Vorderräder (21) des Fahrzeugs angeordnet ist und wobei die Basis der oder jeder Tür im wesentlichen mit dem Boden an der Basis bündig ist, dadurch gekennzeichnet, daß der/die horizontale Abschnitt/e (73) des Bodens auf der Basis der Tür an dem/den Abschnitt/en auf einer Höhe angeordnet sind, wodurch sie im Betrieb nicht oberhalb der Drehachse der Vorderräder (21) des Fahrzeugs, mit dem die Kabine (14) verwendet wird, angeordnet sind.

2. Kabinenkonstruktion nach Anspruch 1, dadurch gekennzeichnet, daß der Fahrersitz (57) mittig in der Kabinenkonstruktion angeordnet ist.

3. Kabinenkonstruktion nach Anspruch 1 oder 2, dadurch gekennzeichnet, daß die oder jede der Türen (66) beim Öffnen im wesentlichen nicht seitlich über die Gesamtbreite der Kabinenkonstruktion hervorstehen.

4. Kabinenkonstruktion nach einem der vorhergehenden Ansprüche, dadurch gekennzeichnet, daß jeder der Besatzungssitze (82a-d) im vorwiegend hinter dem Fahrersitz (57) und vorwiegend höher als der Fahrersitz angeordnet sind.

5. Kabinenkonstruktion nach Anspruch 4, dadurch gekennzeichnet, daß jeder der Besatzungssitze (82a-d) auf einer Höhe oberhalb eines Motorabteils (20) angeordnet ist.

6. Kabinenkonstruktion nach einem der vorhergehenden Ansprüche, dadurch gekennzeichnet, daß jede Seitenwand (54, 55) eine Zugangsöffnung (65) hat und der Boden (73) einen Abschnitt hat, der sich horizontal oder im wesentlichen horizontal quer durch die Kabinenkonstruktion von der einen Zugangsöffnung (58) zur anderen (58) erstreckt.

7. Kabinenkonstruktion nach einem der vorhergehenden Ansprüche, dadurch gekennzeichnet, daß eine horizontale Linie an oder neben der mittleren Höhe der oder jeder Zugangsöffnung und Vorder- und Hinterkanten der Zugangsöffnung verbindend in einem spitzen Winkel, der zwischen 10° und 45° liegt, zur Längsachse der Kabinenkonstruktion geneigt ist.

8. Kabinenkonstruktion nach einem der vorhergehenden Ansprüche, dadurch gekennzeichnet, daß der horizontale Abschnitt (73) des Bodens oder bei horizontalem Boden der gesamte Boden auf einer Höhe über dem (Fahrbahn-)Boden ist, die bei beladenem Fahrzeug im Betrieb im Bereich von 410mm + 300mm oder - 150mm liegt.

9. Kabinenkonstruktion nach Anspruch 8, dadurch gekennzeichnet, daß die Schwenkachse (67) der Tür (66) relativ zu einer Senkrechten zu mindestens einem Vorderabschnitt (68) der Tür mindestens in der Vorwärts- und Rückwärtsrichtung der Kabine in einem Winkel zwischen 0° und 10° geneigt ist.

10. Kabinenkonstruktion nach Anspruch 3, dadurch gekennzeichnet, daß die Tür (66) sich nach innen in die Kabinenkonstruktion hinein faltet.

11. Kabinenkonstruktion nach einem der Ansprüche 6 bis 10, dadurch gekennzeichnet, daß in Rückwärtsrichtung vom hinteren Abschnitt (73) des Bodens die Kabinenkonstruktion mindestens zwei Stufen (80, 81) hat, wobei jede Stufe einen Anstiegsteil (84, 85) und einen Trittflächenteil (80a, 81a) aufweist und der erste Trittflächenteil (80a) auf einer solchen Höhe ist, daß er einen Sitzteil des Fahrersitzes (57) stützt.

12. Kabinenkonstruktion nach Anspruch 11, dadurch gekennzeichnet, daß die zweite Stufe (81) einen Trittflächenteil (81a) hat, um eine Zugangsstufe zu Besatzungssitzen (82a-d) zu bilden, die auf einem Trittflächenteil auf einer dritten Stufe (83) gebildet sind, wobei die Besatzungssitze im wesentlichen quer zur Kabinenkonstruktion hinter dem Fahrersitz (57) angeordnet sind, wobei der Trittflächenteil (81a) der zweiten Stufe (81) derart ausgelegt ist, daß er eine Fußstütze für die in den Besatzungssitzen sitzenden Besatzungsmitglieder bildet.

13. Kabinenkonstruktion nach Anspruch 11, dadurch gekennzeichnet, daß die zweite Stufe (181) einen Trittflächenteil auf einer derartigen Höhe hat, daß sie einen Sitzteil von Mannschaftssitzen (182) abstützt, die quer zur Kabinenkonstruktion ausgerichtet oder im wesentlichen ausgerichtet sind, und wobei die Mannschaftssitze vorwiegend hinter dem Fahrersitz (57) angeordnet sind und der Trittflächenteil der ersten Stufe (180) dazu ausgelegt ist, um eine Füßstütze für die Besatzungsmitglieder zu bilden.

## Revendications

1. Structure formant cabine pour un véhicule utilitaire comprenant un plancher (51), une paroi avant (52), une paroi arrière (53), deux parois latérales (54,55), un toit, un siège conducteur (57) et des moyens de commande (41) susceptibles d'être actionnés par le conducteur, dans laquelle la cabine comprend au moins deux sièges pour les équipiers (82) et au moins une paroi latérale possède une ouverture d'accès (65) susceptible d'être fermée par au moins une porte (66), le plancher (51) comporte une ou des partie(s) (73) qui s'étend(ent) dans le sens horizontal ou sensiblement horizontal à partir de la base de la ou des ouverture(s) d'accès (65) au ou de manière adjacente au siège du conducteur (57), au moins le plancher, ou une partie arrière (73) de ce dernier, est situé à l'avant du moteur ou d'un compartiment de ce dernier (20) et/ou du ou d'un logement des roues avant (21) du véhicule, et la base de la porte ou de chacune d'entre elles est sensiblement au même niveau que le plancher au niveau de ladite base caractérisée en ce que ladite (lesdites) partie(s) horizontale(s) du plancher à la base de la porte au niveau de ladite (desdites) partie(s) est (sont) placée(s) à un niveau selon lequel, en utilisation, elles ne se trouvent pas au-dessus de l'axe de rotation des roues avant (21) du véhicule sur lequel la cabine (14) doit être utilisée.

2. Structure formant cabine selon la revendication 1 caractérisée en ce que le siège du conducteur (57) est placé au centre de la structure formant cabine (14).

3. Structure formant cabine selon la revendication 1 ou 2, caractérisée en ce que ladite ou chaque dite porte (66) ne se projette pas, quand on l'ouvre, dans le sens latéral sensiblement au-delà de la largeur totale de la structure formant cabine.

4. Structure formant cabine selon l'une quelconque des revendications précédentes, caractérisée en ce que chacun desdits sièges équipiers (82a-d) est généralement placé en arrière du siège du conducteur (57) et à un niveau généralement plus élevé que le siège du conducteur.

5. Structure formant cabine selon la revendication 4, caractérisée en ce que chacun desdits sièges équipiers (82a-d) est placé à un niveau situé au-dessus d'un compartiment du moteur (20).

6. Structure formant cabine selon l'une quelconque des revendications précédentes, caractérisée en ce que chaque paroi latérale (54,55) possède une ouverture d'accès (65) et le plancher (73) présente une partie qui s'étend dans le sens horizontal ou sensiblement horizontal dans le sens transversal de la structure formant cabine d'une ouverture d'accès (58) à l'autre (58).

7. Structure formant cabine selon l'une quelconque des revendications précédentes, caractérisée en ce qu'une ligne horizontale, à mi-hauteur ou adjacente à cette dernière par rapport à chaque ouverture d'accès, et rejoignant les bords avant et arrière de l'ouverture d'accès est inclinée vers l'axe longitudinal de la structure formant cabine suivant un angle aigu qui se situe dans une plage comprise entre 10° et 45°.

8. Structure formant cabine selon l'une quelconque des revendications précédentes, caractérisée en ce que la partie horizontale (73) du plancher, ou l'ensemble du plancher lorsque l'ensemble du plancher est horizontal, se situe à une hauteur au-dessus du niveau du sol en utilisation lorsque le véhicule est chargé, laquelle est comprise entre 410 mm + 300 mm ou- 150 mm.

9. Structure formant cabine selon la revendication 8, caractérisée en ce que l'axe de pivotement (67) de la porte (66) est orienté par rapport à une ligne perpendiculaire à au moins une partie avant (68) du plancher au moins dans le sens avant et arrière de la cabine suivant un angle compris entre 0° et 10°.

10. Structure formant cabine selon la revendication 3, caractérisée en ce que la porte (66) se plie à l'intérieur de la structure formant cabine.

11. Structure formant cabine selon l'une quelconque des revendications 6 à 10, caractérisée en ce qu'à l'arrière de la partie arrière (73) du plancher, la structure formant cabine possède au moins deux marches (80,81), chaque marche comprenant une partie formant contre marche (84,85) et une partie formant giron (80a, 81a) et la première partie formant giron (80a) se situe à une hauteur permettant de supporter une partie formant siège du conducteur (57).

12. Structure formant cabine selon la revendication 11, caractérisée en ce que la deuxième marche (81) présente une partie formant giron (81a) qui sert de marche d'accès aux sièges équipiers (82a-d) installés sur une partie formant giron d'une troisième marche (83), les sièges équipiers étant disposés dans un sens sensiblement transversal par rapport à la structure formant cabine derrière le siège du conducteur (57), la partie formant giron (81a) de la deuxième marche (81) étant adaptée pour servir de support aux pieds des membres de l'équipe une fois assis dans lesdits sièges équipiers.

13. Structure formant cabine selon la revendication 11, caractérisée en ce que la deuxième marche (181) possède une partie formant giron à une hauteur permettant de supporter une partie formant siège des sièges équipiers (182), lesquels sont alignés ou sensiblement alignés dans le sens transversal de la structure formant cabine et les sièges équipiers sont généralement placés derrière le siège du conducteur (57), la partie formant giron de la première marche 180 étant adaptée pour fournir un support pour les pieds des membres de l'équipe.
